# EUROPÄISCHE PATENTANMELDUNG

(11) **EP 0 858 174 A2**
(43) Veröffentlichungstag der Anmeldung: **12.08.1998**
(21) Anmeldenummer: 98200337.8
(22) Anmeldetag: 05.02.1998
(51) Int. Cl.: H04B 3/54

(54) **Verfahren und System zum Ubertragen von Daten und Energie**

(30) Priorität: 11.02.1997 DE 19704884; 02.01.1998 DE 19800048
(71) Anmelder: Philips Patentverwaltung GmbH, 22335 Hamburg (DE); Philips Electronics N.V., 5621 BA Eindhoven (NL)
(72) Erfinder: Mores, Robert, Dr., 22335 Hamburg (DE); Bühring, Peter, 22335 Hamburg (DE); Jöhnk, Egon, 22335 Hamburg (DE)
(74) Vertreter: Poddig, Dieter, Dipl.-Ing.

(57) **Zusammenfassung**

Für die Übertragung von Energie und Daten über die gleiche Leitung, an die eine Anzahl Stationen angeschlossen sind, wird vorgeschlagen, in die Leitung eine bipolare Wechselspannung einzuspeisen, bei der die eine Polarität nur zur Energieversorgung dient und die Datenübertragung nur durch Amplitudenmodulation der Impulse der anderen Polarität erfolgt. Wenn die Impulse der einen Polarität sehr niederohmig eingespeist werden, kann eine große Energie an die Stationen übertragen werden, während für die Modulation für die Datenübertragung nur eine geringe Leistung erforderlich ist, wenn die Impulse der anderen Polarität hochohmig eingespeist werden. Dadurch sind nur zwei Leiter notwendig, von denen im einfachsten Falle einer durch die System-Masse ersetzt werden kann. Bei Verwendung von drei Leitern kann auf sehr einfache Weise eine erhöhte Fehlersicherheit gegen Ausfall eines Leiters erreicht werden. Eine andere Möglichkeit, im Falle eines Kurzschlusses wenigstens Teile des Systems funktionsfähig zu erhalten, besteht darin, die Leiter durch Trenneinheiten zu unterteilen, die im Kurzschlußfall automatisch wenigstens einen Leiter trennen und nach Aufheben des Kurzschlusses automatisch wieder verbinden.

## Beschreibung

Die Erfindung betrifft die Übertragung von Daten und Energie über eine gemeinsame Leitung, an die eine Energiequelle und mehrere Stationen angeschlossen sind, wobei jede der Stationen grundsätzlich Energie und Daten über die Leitung empfangen und Daten über die Leitung aussenden kann.

Wenn die gleiche Leitung sowohl für die Übertragung von Energie als auch von Daten verwendet wird, braucht die Leitung nur wenige einzelne Leiter bzw. Drähte zu enthalten, im Grenzfall nur zwei Leiter. Dies verringert die Leitungskosten insbesondere für räumlich ausgedehnte Systeme erheblich. Dieses Prinzip ist daher in der Vergangenheit auch in verschiedenen Ausführungen angewendet worden.

In der DE 39 07 652 A1 wird eine Schaltungsanordnung beschrieben, bei der eine Stromversorgungseinheit eine Gleichspannung einer Zweidraht-Busleitung zuführt, an die mehrere Stationen angeschlossen sind. In den einzelnen Stationen ist ein Energiespeicher in Form eines Kondensators vorhanden, der über einen Gleichrichter und einen Widerstand durch die Gleichspannung auf den Busleitern aufgeladen wird, und daraus wird die Stromversorgung für die elektronische Schaltung der Station abgeleitet. Zum Aussenden von Daten werden die Busleiter datenabhängig kurzgeschlossen. Dies bedeutet jedoch, daß die Stromversorgungseinheit die Gleichspannung relativ hochohmig in die Busleiter einspeisen muß, so daß darüber nur eine begrenzte Anzahl von Stationen und vor allem keine starken Lasten in den Stationen gespeist werden können.

Aus der DE 41 38 065 A1 ist eine Einrichtung zur Übertragung von Daten und Energie über eine Leitung bekannt, bei der die Leitung zwei Drähte und eine Abschirmung umfaßt, in der die beiden Drähte geführt sind. Die einzelnen Stationen sind an beide Drähte und an die Abschirmung angeschlossen und erhalten über jeden Draht den halben Betriebsstrom, und der volle Betriebsstrom wird über die Abschirmung zurückgeleitet. Die Daten werden auf beiden Leitern durch gegenphasige Spannungssignale übertragen. Um diese Spannungssignale durch die Energieübertragung möglichst wenig zu belasten, wird die Energie von beiden Leitern in den Stationen durch Stromsenken abgeleitet. Dies bedingt relativ aufwendige Mittel zur Gewinnung einer im wesentlichen konstanten Gleichspannung zur Speisung der Schaltung in den Stationen, und auch hierbei ist die zu den Stationen übertragbare Energie begrenzt.

Aufgabe der Erfindung ist es, ein Verfahren sowie ein System zur Übertragung von Daten und Energie über die gleiche Leitung anzugeben, bei dem die übertragbare Energie grundsätzlich nicht begrenzt ist und dennoch Daten für eine sehr Zuverlässige Übertragung der Leitung hochohmig zugeführt werden können.

Diese Aufgabe wird erfindungsgemäß dadurch gelöst, daß auf zwei Leitern eine Wechselspannung übertragen wird, wobei die Spannung der einen Polarität für die elektrische Versorgung der Stationen und die Spannung der anderen Polarität für die Datenübertragung verwendet wird. Auf diese Weise werden die beiden Leiter im Zeitmultiplex für die Übertragung sowohl der elektrischen Energie als auch der Daten genutzt, wobei sich die Stationen während der Datenübertragung aus einem lokalen Energiespeicher versorgen, welcher in der Phase der Energieübertragung wieder aufgeladen wird. Durch die Umkehrung der Polarität lassen sich die elektrische Versorgung und die Datenübertragung weitestgehend unabhängig voneinander ausgestalten. Die Übertragungsmethode für die Daten und die statischen und dynamischen Eigenschaften der elektrischen Versorgung bzw. auch der anwendungsbezogenen Lasten an den Stationen sind voneinander entkoppelt sowohl durch die zeitliche Abfolge als auch durch den Wechsel der Polarität. So laßt sich auch mit einfachsten Modulationsarten eine sichere Datenübertragung erreichen.

Wichtig für den sicheren Betrieb eines solchen Systemes ist, daß diese Entkopplung bereits durch die Verwendung der Wechselspannung gegeben ist und dadurch ohne eine aktive Synchronisierung der Stationen selbst und ohne Aktionen an den Stationen, wie z.B. einer Betriebsumschaltung, erfolgt. Diese Entkopplung an den Stationen ist bereits mit passiven Bauelementen realisierbar, wenn den Leitern der Strom z.B. mittels Dioden nur in der einen Richtung für die elektrische Versorgung entnommen wird und der Strom nur in der anderen Richtung für die Übertragung von Daten moduliert wird. Die Vermeidung einer aktiven Mode-Umschaltung bzw. Synchronisierung an den Stationen führt zu sehr einfachen und zuverlässigen Systemen.

Die Energiequelle in Form eines Generators, der die Wechselspannung in die beiden Leiter einspeist, kann diese ohne Bezug zu dem Massepotential erzeugen, so daß ein Kurzschluß eines Leiters mit System-Masse oder mit einer anderen Versorgungsleitung ohne irgendwelche erforderlichen Aktionen toleriert wird.

Darüber hinaus können auch Unterbrechungsfehler bei entsprechender Ausgestaltung des Systems toleriert werden, wenn ein dritter Leiter als Ersatzleiter für den unterbrochenen Leiter verwendet wird. Es kann auch die System-Masse als Ersatzleiter für den unterbrochenen Leiter verwendet werden, wobei in einer solchen Rückfall-Betriebsart die Systemfunktion erhalten bleibt, aber der differentielle Betrieb typischerweise keinen effektiven Beitrag mehr zur elektromagnetischen Verträglichkeit (EMV) des Systems leistet. Außerdem kann - je nach Ausgestaltung - bei Verwendung der System-Masse als Ersatzleiter der Kurzschluß eines Leiters nicht mehr gleichzeitig toleriert werden.

Um im Falle eines Kurzschlusses den Generator, der die Energie in die Leitungen einspeist, zu schützen, kann der bzw. einer der fehlerhaften Leiter durch eine Sicherung im Generator abgeschaltet werden. Damit ist dann aber bei einigen Augestaltungen des erfindungsgemäßen Systems eine Energieversorgung und Datenübertragung an keine der angeschlossenen Stationen möglich. Um im Falle eines Kurzschlusses wenigstens einige Stationen weiter betreiben zu können, können in wenigstens einen Leiter wenigstens eine Trenneinheit eingefügt werden, die den betreffenden Leiter im Kurzschlußfall automatisch unterbricht. Dadurch kann das System mit wenigstens einen Teil der Stationen betriebsfähig sein. Insbesondere wenn das Leitersystem als Ringleiter ausgebildet ist und mehrere verteilte Trenneinheiten verwendet werden, können durch einen Kurzschluß noch die größten Teile des Systems betriebsfähig bleiben.

Die Trenneinheiten bestehen je aus wenigstens einer Überwachungseinheit und einem Schalter, wobei die Überwachungseinheit den Schalter in den Leitern so steuert, daß im Kurzschluß- oder Überlastungsfall der Schalter geöffnet wird. Der Schalter ist mit einem strombegrenzenden Element überbrückt. Damit wird das Potential hochohmig auf den Leiterabschnitt hinter der Trenneinheit übertragen. Anhand dieses Potentials steuert die Überwachungseinheit den Schalter in der Trenneinheit. Wenn ein Kurzschluß oder eine Überlastung aufgehoben wird, wird der Schalter automatisch durch die Überwachungseinheit geschlossen.

Der Schalter enthält vorzugsweise zwei Feldeffekt-Leistungstransistoren vom gleichen Leitungstyp, deren Sources miteinander verbunden sind. Auch deren Gates sind miteinander verbunden und mit einem Steuertransistor der Überwachungseinheit gekoppelt. Der Steuertransistor ist vorzugsweise ebenfalls ein Feldeffekttransistor vom anderen Leitungsypt als die Leistungstransistoren im Schalter und stellt die Verbindung zum zweiten Leiter her, der im Normalbetrieb ein anderes Potential hat als der Leiter, in den der Schalter mit den Leistungstransistoren eingefügt ist. Die Überwachungseinheit überprüft das Potential der angeschlossenen Leiterabschnitte. Übersteigt dieses Potential eine erste Ansprechschwelle, die über der Schwellspannung der Feldeffekttransistoren der Überwachungseinheiten liegt, wird der Steuertransistor leitend und verbindet den nicht unterbrochenen Leiter mit den Gates der Leistungstransistoren im Schalter. Damit werden die Leistungstransistoren im Schalter leitend und schließen den Schalter. Im Kurzschluß- oder Überlastungsfall fällt das Potential auf den angeschlossenen Leiterabschnitten unter eine zweite Ansprechschwelle, die gleich der ersten Ansprechschwelle sein kann, so daß die Steuertransistoren der Überwachungseinheit und somit die Leistungstransistoren des Zu steuernden Schalters nichtleitend werden und dadurch der Leiter unterbrochen wird und der kurzgeschlossene Leiterabschnitt wirksam vom übrigen funktionierenden Teil des Leitersystem abgetrennt wird.

Da der Steuertransistor die Leistungstransistoren des Schalters nur in einer Halbwelle der Wechselspannung auf den Leitungen leitend steuern kann, ist der Schalter mit einem Speicherelement ergänzt. Dieses Speicherelement ist vorzugsweise eine Kapazität, die beispielsweise in der positiven Halbwelle aufgeladen wird und die notwendige Energie, um den Schalter auch in der negativen Halbwelle geschlossen zu halten, speichert. Diese Kapazität ist zwischen dem Verbindungspunkt der beiden Sources der Leistungstransistoren des Schalters und dem Verbindungspunkt der zusammengeschalteten Gates der Leistungstransistoren geschaltet. Treten Kurzschlüsse jedoch nur während der Halbwelle auf, in der der Schalter durch die gespeicherte Ladung des Kondensators geschlossen wird, werden diese nicht erkannt. Durch eine Erweiterung wird jedoch erreicht, daß die Trenneinheit Kurzschlüsse auch in der zweiten Halbwelle erkennt. Der Leitungstyp der Leistungstransistoren im Schalter legt fest, in welcher Halbwelle Kurzschlüsse erkannt werden.

Das strombegrenzende Element, welches den Schalter überbrückt, ist vorzugsweise ein hochohmiger Widerstand oder eine steuerbare Widerstandskombination und wird im folgenden als Prüfwiderstand bezeichnet. Über diesen Prüfwiderstand wird bei geöffnetem Schalter das Potential hochohmig an den Ausgang der Trenneinheit übertragen. Wird der Kurzschluß behoben, entsteht über dem Prüfwiderstand ein zum Ansprechen der Überwachungseinheit erforderliches Potential und der Schalter wird automatisch geschlossen.

Der Prüfwiderstand kann zweckmäßig stufenweise gesteuert werden. Dazu besteht das strombegrenzende Element aus mehreren in Reihe geschalteten ohmschen Widerständen, wobei einzelne Widerstände mit Hilfe von schaltenden Transistoren überbrückt werden. Damit lassen sich hochohmige und niederohmige Prüfwiderstände realisieren. Zuerst wird über einen hochohmigen Prüfwiderstand das Potential vom Eingang der Trenneinheit auf den Ausgang der Trenneinheit übertragen. Wird jetzt durch die Überwachungseinheit ein Kurzschluß festgestellt, bleibt der Schalter in der Trenneinheit geöffnet, d.h. die Transistoren im Schalter sind nichtleitend. Erst wenn ein Potential festgestellt wird, das über der ersten Ansprechschwelle liegt und der Schalter geschlossen ist, wird der Prüfwiderstand auf einen niederohmigeren Wert umgeschaltet.

Mit einer Hysterese für die Ansprechschwelle des Steuertransistors der Überwachungseinheit wird eine Erhöhung der Erkennungssicherheit von Kurzschlüssen erreicht. Im Normalbetrieb bei geschlossenem Schalter ist die Ansprechschwelle höher, um bei einem Kurzschluß einen Potentialabfall schnell zu registrieren und den Schalter schnell zu öffnen. Bei geöffneten Schaltern ist die Ansprechschwelle niedriger, um über den hochohmigen Prüfwiderstand eine einwandfreie Prüfung auf Kurzschlüsse zu erreichen.

Durch Verwendung solcher Trenneinheiten wird sichergestellt, daß bei einem Kurzschluß, z.B. in der Zuleitung Zu einer Station, eine Kommunikation zwischen anderen Stationen nicht behindert wird.

Ein Vorteil der Erfindung liegt darin, daß die Fehlertoleranz ohne Aktionen, z.B. Betriebsumschaltung, auskommt und dadurch eine hohe Sicherheit und Konsistenz des Systemes erreicht wird. Ein weiterer Vorteil besteht darin, daß auch im Fehlerfalle die differentielle Übertragung und damit die Vorteile der geringen Abstrahlung, hohen Immunität gegen Störeinstrahlung und hohen Toleranz gegenüber Masseversatz zwischen Stationen erhalten bleibt. Ein weiterer Vorteil besteht darin, daß die Zeitreferenz zur Abarbeitung des Datenübertragungsprotokolls sehr unscharf sein darf bzw. sogar ganz entfallen kann, weil der Ansatz der Wechselspannung bereits eine sichere zeitliche Abgrenzung und damit eine sichere Abtastung der Bits in einem Datentelegramm mit sich bringt.

Ausführungsbeispiele der Erfindung werden nachfolgend anhand der Zeichnung näher erläutert. Es zeigen:
Fig. 1 den grundsätzlichen Aufbau eines Systems mit einer Energiequelle und mehreren Stationen, die über zwei Leiter miteinander verbunden sind,
Fig. 2 ein erstes Ausführungsbeispiel für den Aufbau einer Station,
Fig. 3 ein Beispiel für den Spannungsverlauf auf den beiden Leitern mit Datenmodulation,
Fig. 4 ein erstes Ausführungsbeispiel für den grundsätzlichen Aufbau der Energiequelle,
Fig. 5 den Aufbau einer Energiequelle mit einem Übertrager,
Fig. 6 den Aufbau einer Energiequelle mit einem Übertrager mit einer Mittelanzapfung auf der Sekundärseite für eine Dreileitersystsem,
Fig. 7 ein weiteres Ausführungsbeispiel des Aufbaues einer Station, die besonders für das Dreileitersystem geeignet ist,
Fig. 8 den Aufbau einer Energiequelle für ein Dreileitersystem, bei dem der dritte Leiter nur im Fehlerfall verwendet wird,
Fig. 9 den Aufbau eines Systems mit drei Leitern, wobei alle drei Leiter unabhängig von einer Masseverbindung sind,
Fig. 10 den Aufbau eines System mit nur einem Leiter, bei dem die Masse als Rückführung verwendet wird.
Fig. 11 ein Blockschaltbild für den Einsatz von Trenneinheiten,
Fig. 12 ein Blockschaltbild der Trenneinheit in der Leitung mit höherem Potential
Fig. 13 eine detaillierte Schaltungsanordnung für eine Trenneinheit,
Fig. 14 eine detaillierte Schaltungsanordnung für eine Trenneinheit mit Transistoren vom entgegengesetzten Leitungstyp,
Fig. 15 eine Schaltungsanordnung für eine Trenneinheit, ergänzt um Elemente zur Erkennung von Kurzschlüssen in beiden Halbwellen,
Fig. 16 eine Schaltungsanordnung für eine Trenneinheit, ergänzt um Elemente zur Erzeugung einer Hysterese für die Ansprechschwelle.

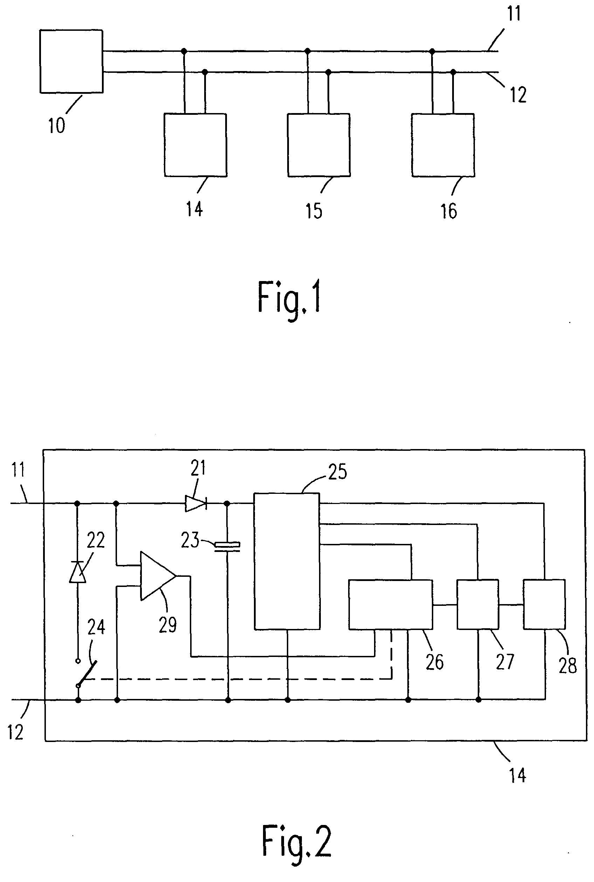

Figur 1 zeigt ein System zum Übertragen von Daten, in dem mittels des Generators 10 eine Wechselspannung erzeugt und in zwei Leiter 11, 12 eingespeist wird. Die angeschlossenen Stationen 13, 14, 15 versorgen sich elektrisch aus der positiven Halbwelle der Wechselspannung und Übertragen während der negativen Halbwelle der Wechselspannung Daten.

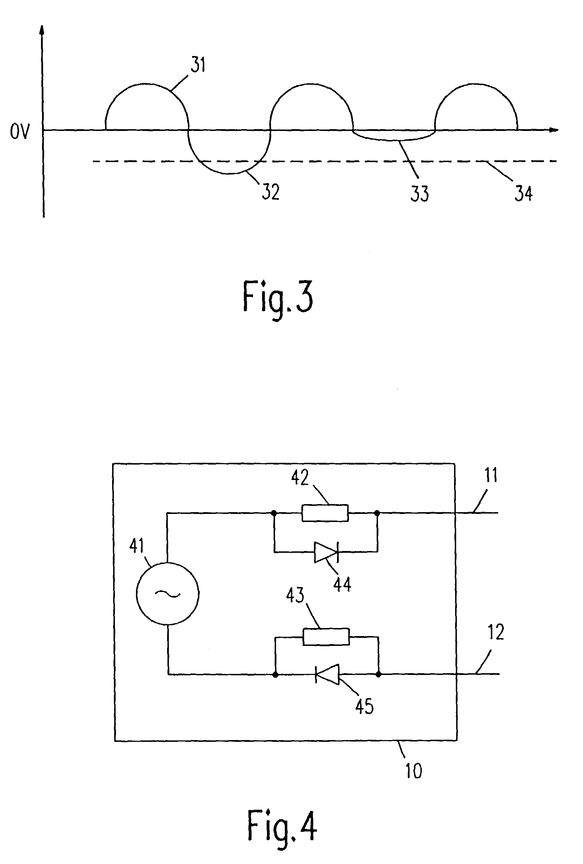

Figur 2 zeigt den Aufbau einer der Stationen, z.B. der Station 14, wobei über Diode 21 während der positiven Halbwelle ein Kondensator 23 aufgeladen wird, aus dem sich die unterschiedlichen Komponenten der Station, wie z.B. eine Schaltung zur Abwicklung des Datenübertragungsprotokolls 26, eine anwendungsbezogene Steuerschaltung 27 und eine anwendungsbezogene Last 28 mittels eines Spannungsreglers 25 elektrisch versorgen. Die negative Halbwelle kann protokollgesteuert mittels eines Schalters 24 und einer weiteren Diode 22 einfach amplitudenmoduliert werden. Die Amplitude der negativen Halbwelle wird mit einem Komparator 29 ausgewertet, dessen differentielle Schwellspannung negativ ist, siehe auch Figur 3.

Figur 3 zeigt den zeitlichen Spannungsverlauf im Prinzip. Die positive Halbwelle 31 dient zur elektrischen Versorgung der Stationen, die negative Halbwelle 32 kann durch die Stationen mittels Schalter 24 in der Amplitude verändert werden. Der Komparator 29 in jeder Station hat eine negative differentielle Empfangsschwelle 34, so daß die Amplitudenmodulation einfach ausgewertet werden kann. Es kann zum Beispiel eine Phase der negativen Halbwelle ein Bit darstellen, wobei die volle Amplitude - Halbwelle 32 - den Ruhezustand bzw. den rezessiven Zustand darstellt, und die reduzierte Amplitude - Halbwelle 33 - den dominanten Zustand. Der dominante Zustand wird durch Schließen des Schalters 24 in einer oder auch mehreren Stationen erreicht, so daß ein gleichzeitiges Senden mehrerer Stationen zerstörungsfrei verläuft und damit im Prinzip alle CSMA (Carrier Sense Multiple Access) Protokolle bzw. deren Data Link Layer wie z.B. Ethernet, CAN, J1850 angewendet werden können. Dabei kann der dominante Zustand ein logisches Bit 0 und der rezessive Zustand ein logisches Bit 1 darstellen oder umgekehrt.

Da sich an den Stationen die einzelnen Bits durch die jeweils dazwischenliegenden positiven Halbwellen klar abgrenzen lassen, können einfache Protokolle angewendet werden, die ohne die in der Regel aufwendigen Mechanismen zur Synchronisierung und gesicherten Abtastung einzelner Bits über ein gesamtes Telegramm hinweg auskommen. Es können auch sehr unscharfe Zeitreferenzen für die Abarbeitung des Protokolls verwendet werden, da die Schaltung 26 zur Abwicklung des Datenübertragungsprotokolls jedes einzelne Bit sicher abtasten kann, indem sie jeweils die Phase zwischen zwei positiven Halbwellen als ein Bit auswertet. Die Zeitreferenzen können je nach verwendetem Protokoll sogar ganz an den Stationen entfallen, da bereits die Periodendauer der Wechselspannung als Zeitreferenz dienen kann.

Bei der Wechselspannung kann es sich auch um eine Rechteckform oder andere Formen handeln, je nach Art des Generators. Es kann auch zugunsten einer höheren Leistungsübertragung die positive Halbwelle länger sein als die negative Halbwelle.

Figur 4 zeigt den Generatoraufbau im Prinzip. Der Generator beinhaltet eine Wechselspannungsquelle 41. Damit der Schalter 24 in den Stationen als leistungsarmer Halbleiterschalter realisiert werden kann, wird die negative Halbwelle hochohmiger abgegeben als die positive Halbwelle. Dies wird durch Serienwiderstände 42, 43 in den Generatorausgängen realisiert, welche mit Dioden 44, 45 parallel geschaltet werden, damit die positive Halbwelle niederohmig bleibt. Bei dieser Ausführung kann auch einer der Widerstände mit paralleler Diode entfallen, d.h. durch einen Kurzschluß ersetzt werden, so daß ein Anschluß des Generators 41 direkt mit dem Leiter 11 bzw. 12 verbunden ist. Der Generator kann im einfachsten Fall eine wechselnd geschaltete H-Brücke aus Halbleiterschaltern sein.

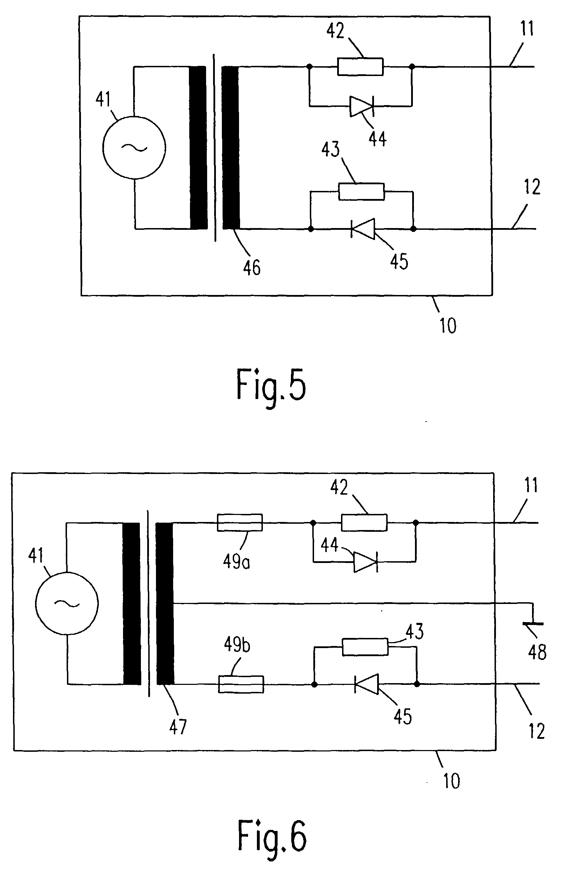

Figur 5 zeigt den Generator mit Verwendung eines zusätzlichen Transformators 46. Der Transformator ist optional. Das Prinzip der elektrischen Versorgung und der Datenübertragung über zwei Leiter funktioniert auch ohne Transformator. Allerdings bringt der Transformator vier weitere Vorteile mit sich. Erstens werden beide Halbwellen symmetriert und damit die störende Abstrahlung minimiert. Zweitens kann die primäre Spannungsamplitude durch Transformation in die sekundäre Spannungsamplitude an die in der Anwendung erforderliche Spannung angepaßt werden. Drittens kann die Wechselspannung auf sehr einfache Weise aus einer unipolaren Spannungsquelle erzeugt werden. Viertens kann die Wechselspannung ohne Bezug zu Massepotential abgegeben werden, so daß ein Kurzschluß eines Leiters mit einem anderen Potential wie Masse oder mit einer anderen Versorgungsspannung toleriert wird.

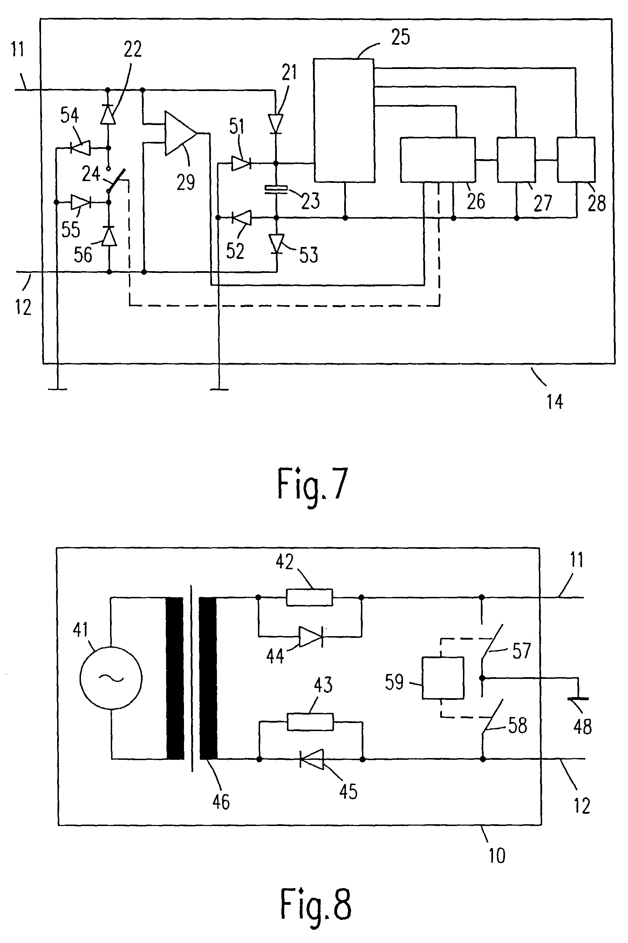

In einer weiteren Ausgestaltung des Systems sind Generator und Station etwas erweitert, um Unterbrechungsfehler tolerieren zu können. Figur 6 zeigt den erweiterten Generator, bei dem ein Transformator 47 mit Mittelanzapfung verwendet wird und diese z.B. mit der System-Masse 48 verbunden wird. Die erweiterte Station in Figur 7 ist mit weiteren Dioden versehen. Besteht ein Unterbrechungsfehler des Leiters 11, so kann über den Strompfad System-Masse, Diode 51, Kondensator 23 und parallel geschaltete Lasten, Diode 53, Leiter 12 die Station immer noch aus der positiven Halbwelle versorgtwerden, allerdings mit nur der halben Sekundärspannung. Gleichermaßen kann die negative Halbwelle noch immer mit Schalter 24 in der Amplitude zur Übertragung von Daten verändert werden, und zwar über den Strompfad Leiter 12, Diode 56, Schalter 24, Diode 54, System-Masse. Ähnlich ist der Sachverhalt bei Unterbrechung des Leiters 12. Dann ergibt sich der Strompfad für die Versorgung aus der positiven Halbwelle über Dioden 21 und 52. Der Strompfad zur Übertragung von Daten ergibt sich über Dioden 55 und 22.

Diese Rückfallbetriebsarten ergeben sich automatisch ohne ein aktives Umschalten an den Stationen oder am Generator. Die Übertragung in den Rückfallbetriebsarten bleibt für beide Halbwellen differentiell, allerdings ergibt sich daraus in der Regel nicht mehr der gewünschte Effekt einer minimieren Abstrahlung aufgrund der unterschiedlichen Leitungsführung und -eigenschaften von Leitern und System-Masse bzw. der damit verbundenen Unsymmetrie des zeitlichen Spannungsverlaufes auf den beiden Leitern. Außerdem ist in Systemen dieser erweiterten Form zur Tolerierung von Unterbrechungsfehlem die Tolerierung von Kurzschlußfehlern an den Leitern 11 und 12 eingeschränkt, da der alternative Strompfad über die System-Masse einen Massebezug darstellt und ein Kurzschluß einer der Leiter 11 oder 12 mit beispielsweise Masse die Sekundärwicklung kurzschließt.

Letzterer Nachteil kann aufgehoben werden, wenn ein ohnehin zu realisierender Kurzschlußschutz des Generators z.B. als Feinsicherung 49a und 49b ausgeführt ist, so daß ein Kurzschlußfehler zum Ansprechen der Sicherung führt und dadurch wie ein Unterbrechungsfehler wirkt, der seinerseits durch die gegebene Anordnung bereits toleriert wird. Auf diese Weise kann entweder ein Kurzschlußfehler oder ein oder mehrere Unterbrechungsfehler auf einem Leiter, toleriert werden.

In einer anderen Ausgestaltung des Systems werden die Unterbrechungsfehler auf etwas andere Weise toleriert. Die Stationen sind gleicherweise entsprechend Figur 7 aufgebaut, der Generator ist allerdings gemäß Figur 8 ohne Mittelanzapfung am Transformator versehen und zusätzlich mit Schaltern 57 und 58 ausgestattet, die über die Ansteuerschaltung 59 angesteuert werden. Die Ansteuerschaltung 59 kann nach Feststellen eines Unterbrechungsfehlers, z. B. bei gestörter Kommunikation mit einer Station, die beiden Schalter wechselnd schließen, bis die Kommunikation wieder hergestellt ist. Diese Ausgestaltung erfordert anders als bei der oben ausgeführten Ausgestaltung Aktionen zur Fehlertoleranz. Allerdings sind diese Aktionen einmalig zentral gesteuert, die Stationen selbst brauchen keine Aktionen einleiten. Dies ist gegenüber anderen bekannten fehlertoleranten Systemen immer noch sehr vorteilhaft, bei denen wie zum Beipiel bei ISO11992 die Aktionen an allen Stationen und zwar synchron miteinander ausgeführt werden müssen, bis nach einer Reihe von Kommunikationsversuchen die verbleibenden Nutzungsmöglichkeiten der vorhandenen Leiter festgestellt sind.

Ein weiterer Vorteil bei dieser Ausgestaltung besteht darin, daß mindestens Kurzschlußfehler mit Masse nunmehr ohne weiteres toleriert werden können, da der Massebezug bei geöffneten Schaltern 57 und 58 nicht vorhanden ist. Die Feinsicherungen entfallen demnach bei dieser Ausführung. Es können Kurzschlußfehler oder Unterbrechungsfehler toleriert werden, wobei sich die Ansteuerschaltung 59 gegebenenfalls vor Schließen eines Schalters 57 oder 58 über das Ausbleiben eines möglicherweise gleichzeitig bestehenden Kurzschlusses vergewissert, z.B. mittels Spannugsabtastung.

Ein weiterer Vorteil bei dieser Ausgestaltung besteht darin, daß bei einem Unterbrechungsfehler nach generatorseitigem Zuschalten der Masse auf den entsprechend richtigen Leiter den Stationen wieder der volle Spannungshub zur Verfügung steht, während bei obiger Ausgestaltung mit Mittelanzapfung am Transformator nur der halbe Pegel zur Verfügung steht. Bei dieser Ausführung muß demnach nicht - vorbeugend für den Fehlerfall - die Versorgung überdimensioniert werden, was zu einer ökonomischeren Umsetzung führt.

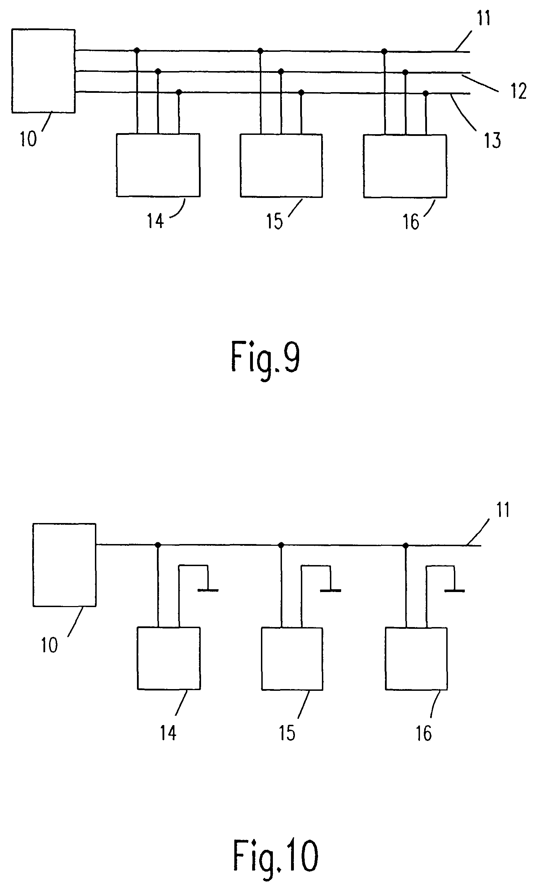

Bei beiden Ausgestaltungen zur Tolerierung von Unterbrechungsfehlern bleibt der Nachteil einer erhöhten Abstrahlung im Fehlerfall. Dieser kann durch geringen Mehraufwand eliminiert werden, wenn - wie in Figur 9 dargestellt - alternativ statt der System-Masse ein dritter Leiter 13 parallel mit Leitern 11 und 12 geführt wird. Es ergibt sich wieder der gewünschte Effekt einer minimierten Abstrahlung auch in der Rückfallbetriebsart, da der Betrieb streng differentiell bleibt. Für die eine Ausgestaltung des Systemes ergibt sich außerdem durch Verwendung des alternativen Leiters 13 statt der System-Masse die gleichzeitige Tolerierung von Unterbrechungsfehlern und eines Kurzschlusses eines Leiters, da auch der Leiter 13 frei vom Massepotential betrieben wird. Darüberhinaus wird auch der Kurzschluß zwischen Leitern toleriert, und zwar zwischen den Leitern 11 und 13 oder zwischen den Leitern 12 und 13, vorausgesetzt, der Generatur ist kurzschlußfest. Auch für die andere weitere Ausgestaltung des Systemes ergibt sich der Vorteil der Tolerierung eines Kurzschlusses zwischen einem Leiter mit entweder Masse oder einem anderen Versorgungspotential und gleichzeitig eines oder mehrerer Unterbrechungsfehler an einem Leiter. Auch hier werden Kurzschlüsse zwischen Leitern 11 und 13 bzw. zwischen 12 und 13 toleriert.

Dieser sehr fehlertoleranten Ausgestaltung der Erfindung steht die in Figur 10 gezeigte kostenoptimierte Ausgestaltung der Erfindung gegenüber. In Systemen, die eine erhöhte Abstrahlung tolerieren und ohne Fehlertoleranz auskommen, kann die Energie- und Datenübertragung mit nur einem Leiter und einem zusätzlichen Anschluß der System-Masse auskommen, so daß sehr kostengünstig nur ein Leiter, z.B. Leiter 11, installiert werden muß. Der andere Leiter, z.B. Leiter 12, wird durch die System-Masse ersetzt. Beim Generator kann bei dieser Ausgestaltung außerdem ein Widerstand und eine Diode gespart werden.

Die Erfindung läßt sich demnach für bestimmte Anwendungen optimal nutzen hinsichtlich der möglichen Kosteneinsparungen und der geforderten Fehlertoleranz optimal ausgestalten. Wenn dabei in den bezüglich des Leiteraufwandes einfacheren Ausgestaltungen, z.B. nach den Figuren 1 bis 5 und 10, in einem Kurzschlußfall wenigstens ein Teil der Stationen noch funktionsfähig bleiben soll, können in wenigstens einem Leiter Trenneinheiten eingefügt werden, die den vom Generator aus hinter der Trenneinheit kurzgeschlossenen Teil automatisch abtrennen und nach Aufhebung des Kurzschlusses automatisch wieder auschalten.

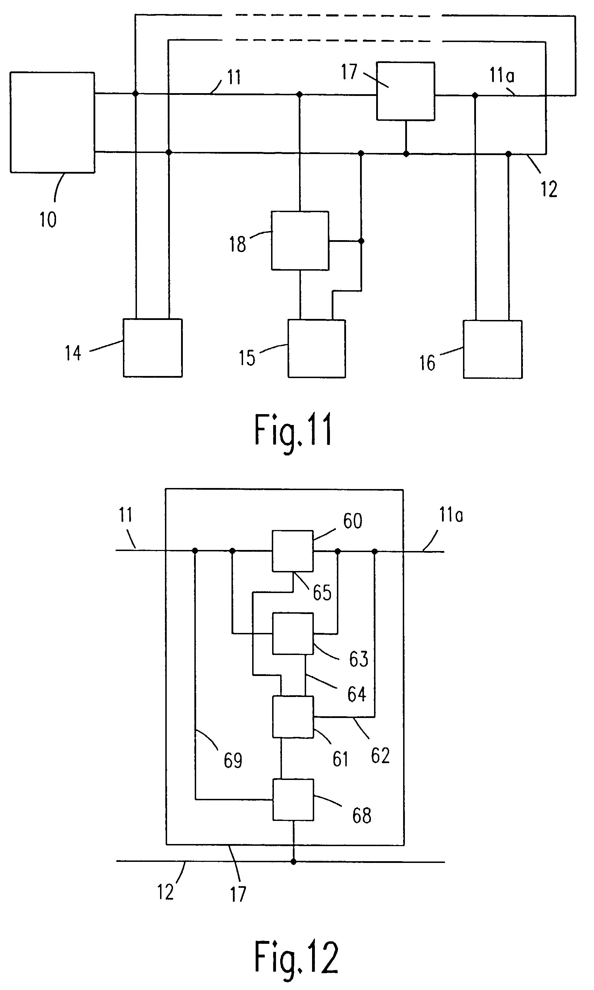

Figur 11 zeigt ein System, bei dem in den Leitungen 11 und 12 für die Stationen 14, 15 und 16 Trenneinheiten zur Unterbrechung ganzer Systemteile (Trenneinheit 17) oder in der Zuleitung zu einer Station zur Abtrennung nur dieser Station (Trenneinheit 18) vorgesehen sind. Mit 11a ist der Leiterabschnitt gekennzeichnet, der aus Sicht des Generators 10 hinter der Trenneinheit liegt und im Kurzschluß- oder Überlastungsfall vom restlichen System mit allen an diesen Leiterabschnitt angeschlossenen Stationen getrennt wird. In Figur 11 ist angenommen, daß die Leitungen 11 und 12 im Ring geschlossen sind und wieder zum Generator 10 zurückgeführt werden. In diesem Ring sind weitere, nicht dargestellte Trenneinheiten angoerdnet, so daß zwischen je zwei Trenneinheiten mindestens eine Station liegt. Wenn in einem Leitungsabschnitt zwischen zwei Trenneinheiten ein Kurzschluß auftritt, werden nur die in diesem Leitungsabschnitt liegenden Stationen abgeschaltet, das übrige System bleibt voll funktionsfähig.

Figur 12 zeigt ein Blockschaltbild für eine Trenneinheit 17 , die in die Leitung 11 eingefügt ist. Diese Trenneinheit 17 enthält einen Schalter 60, einen Prüfwiderstand 63 und die Überwachungseinheiten 61 und 68, wobei die Überwachungseinheit 68 mit der Überwachungseinheit 61 in Reihe geschaltet ist und die Verbindung zwischen dem Steuereingang 65 und der nicht unterbrochenen Leitung 12 herstellt. Mittels der Prüfleitung 62 der Überwachungseinheit 61 wird am Ausgang das Potential des Leiterabschnitts 11a des Schalters 60 und mittels der Prüfleitung 69 der Überwachungseinheit 68 das Potential des Leiterabschmitts 11 am Eingang des Schalters 60 geprüft. Der Prüfwiderstand 63 wird über den Steuereingang 64 von den Überwachungseinheiten 61 und 68 gesteuert.

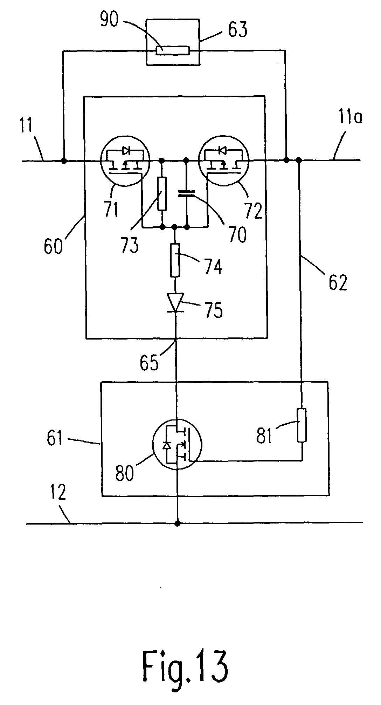

Figur 13 zeigt eine Schaltungsanordnung für eine Realisierung einer Trenneinheit nach Fig. 12. Diese Anordnung enthält im Schalter 60 p-Kanal Leistungstransistoren 71, 72 und Widerstände 73, 74 sowie eine Kapazität 70 und eine Diode 75 und in der Überwachungseinheit 61 einen n-Kanal Steuertransistor 80 und einen Widerstand 81. Die Kapazität 70 ist zwischen dem Verbindungspunkt der beiden Sources der Leistungstransistoren 71 und 72 des Schalters 60 und dem Verbindungspunkt der zusammengeschalteten Gates der Leistungstransistoren 71 und 72 angeordnet. Der Prüfwiderstand 63, als strombegrenzendes, den Schalter 60 überbrückendes Element, wird in diesem Beispiel nicht gesteuert und enthält deshalb nur den einfachen ohmschen Widerstand 90.

Hier wird nur eine Abtastung der Leitung 11a am Ausgang des Schalters 60 mit nur einer Überwachungseinheit 61 verwendet. Eine Prüfleitung 62 der Überwachungseinheit 61 zum Ansteuern des Steuertransistors 80 über den Widerstand 81 tastet das Potential der Leitung 11a am Ausgang des Schalters 60 ab. Der Schalter 60 ist in Leitung 11 eingefügt, und die Gates der beiden Leistungstransistoren 71 und 72 sind über den Spannungsteiler aus den Widerständen 73 und 74 mit dem Steuereingang 65 verbunden. Nur wenn ein Potential, das niedriger als das Potential der Leitung 11 ist, am Steuereingang 65 anliegt, wird eine Kapazität 70 über den Widerstand 74 und die Diode 75 aufgeladen und werden die Leistungstransistoren 71 und 72 leitend. Während der negativen Halbwelle der Wechselspannung, in der das Potential der Leitung 11 niedriger ist als das Potential der Leitung 12, verhindert die Diode 75 ein Umladen der Kapazität 70, so daß die erforderliche Spannung zum Schließen der Leistungstransistoren 71 und 72 erhalten bleibt. Dabei ist die Entladung der Kapazität 70 über den Widerstand 73 so einzustellen, daß während der negativen Halbwelle keine zu große Änderung des Ladezustandes der Kapazität 70 auftritt.

Das Potential der Leitung 11 am Eingang des Schalters 60 wird bei geöffneten Leistungstransistoren 71 und 72 über den Prüfwiderstand 63 an den Ausgang des Schalters 60 zum Leitungsabschnitt 11a geführt. Dieses Potential wird mit der Prüfleitung 62 abgetastet und dem Steuereingang der Überwachungseinheit 61 und darin über den Widerstand 81 dem Gate des Steuertransistors 80 zugeführt. Übersteigt das Potential an der Prüfleitung 62 eine erste Ansprechschwelle, wird der Steuertransistor 80 in der Überwachungseinheit 61 geschlossen. Die Überwachungseinheit schaltet das Potential der Leitung 12 auf den Steuereingang 65 des Schalters 60 durch, und damit werden durch den Spannungsabfall am Widerstand 73 die Leistungstransistoren 71 und 72 geschlossen. Damit ist der ungestörte Normalbetrieb der Trenneinheit erreicht.

Liegt am Ausgang der Trenneinheit ein Kurzschluß oder eine Überlastung zwischen den Leitungen 11a und 12 vor, unterschreitet das Potential, das über den Prüfwiderstand 63 zum Leiterabschnitt 11a geleitet wird, am Prüfeingang 62 der Überwachungseinheit 61 die Ansprechschwelle, die für das Schließen des Steuertransistors 80 erforderlich ist, und der Steuertransistor 80 der Überwachungseinheit 61 wird nichtleitend. Damit kann der Steuereingang 65 nicht mit dem Potential der Leitung 12 verbunden werden, und es kann sich die Spannung, die für das Schließen der Leistungstransistoren 71 und 72 erforderlich ist, nicht einstellen, so daß die Leistungstransistoren 71 und 72 nichtleitend sind und der Schalter 60 geöffnet bleibt. Damit sind der speisende Generator 10 (Fig. 1) und alle nicht an diesem Leiterabschnitt 11a liegenden Stationen vom Kurzschluß abgetrennt.

Über die Verbindung des Prüfwiderstandes 63 ist ein Prüfzustand hergestellt. Wird der Kurzschluß oder die Überlastung aufgehoben, kann sich das Potential wieder über den Prüfwiderstand aufbauen und die Ansprechschwelle überschreiten, so daß die Steuertransistoren 80 und 80a das Potential der Leitung 12 wieder durchschalten und die Leistungstransistoren 71 und 72 leitend werden und der Schalter 60 geschlossen wird, wodurch der Normalbetrieb automatisch wieder hergestellt ist.

Die Schaltungsanordnung aus Fig. 13 erkennt direkte Kurzschlüsse, Kurzschlüsse über Widerstände und Kurzschlüsse mit Dioden, die in der positiven Halbwelle wirksam sind, dagegen keine Kurzschlüsse mit Dioden, die in der negativen Halbwelle wirksam sind, d.h. mit der Anode an Leitung 12 und der Kathode an Leitung 11. Für diesen Fall wird später noch ein Ausführungsbeispiel angegeben.

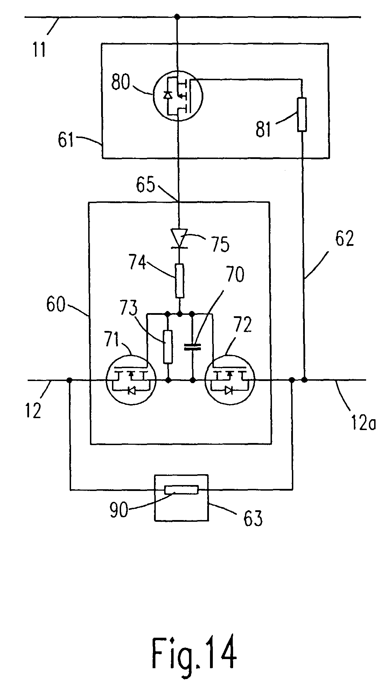

Fig. 14 zeigt ein Ausführungsbeispiel für eine Trenneinheit, wobei der Schalter 60 in die Leitung 12 eingefügt ist, die während der positiven Halbwelle das niedrigere Potential führt. In diesem Beispiel ist wieder nur eine Abtastung der Leitung 12a am Ausgang des Schalters 20 dargestellt. Auch in diesem Ausführungsbeispiel ist der Prüfwiderstand 23 nicht steuerbar und enthält nur einen ohmschen Widerstand 50.

Nur wenn ein Potential, das höher als das Potential der Leitung 12 ist, an den Steuereingang 65 gelegt wird, leiten die n-Kanal-Leistungstransistoren 71 und 72 im Schalter 60. Die Überwachungseinheit 61 enthält einen p-Kanal Steuertransistor 80, mit dem das Potential der Leitung 11 auf die Steuerleitung 65 durchgeschaltet wird. Das Durchschalten geschieht in Abhängigkeit von dem Potential am Leiterabschnitt 12a, welches mittels der Prüfleitung 62 am Ausgang des Schalters 60 abgetastet wird. Beim Einschalten wird das Potential der Leitung 12 am Eingang des Schalters 60 bei nichtleitenden Leistungstransistoren 71 und 72 über den Prüfwiderstand 63 an den Ausgang des Schalters 60 geführt. Dieses Potential wird mit der Prüfleitung 62 abgetastet und an den Steuereingang des Steuertransistors 80 der Überwachungseinheit 61 geführt. Übersteigt das Potential eine Ansprechschwelle, wird der Steuertransistor 80 geschlossen. Dadurch wird der Steuereingang 65 des Schalters 60 mit dem Potential der Leitung 11 verbunden, welches die Leistungsschalter 71 und 72 in den leitenden Zustand versetzt und den Normalbetrieb der Trenneinheit einstellt. Tritt ein Kurzschluß oder eine Überlastung zwischen den Leitungen 11 und 12 auf, erreicht das Potential am Leiterabschnitt 12a nicht den Wert der Ansprechschwelle, der für das Schließen des Steuertransistors 80 erforderlich ist, und der Steuertransistor 80 bleibt nichtleitend. Damit ist der Steuereingang 65 nicht mehr mit dem Potential der Leitung 11 verbunden, und es kann sich die Spannung, die für das Schließen der Leistungstransistoren 71 und 72 erforderlich ist, nicht einstellen. Damit ist der Generator 10 (Fig. 1) vom Kurzschluß abgetrennt. Über den Prüfwiderstand 63 wird der Prüfzustand hergestellt. Wenn ein Kurzschluß während des Betriebs auftritt, sinkt das Potential auf dem Leiterabschnitt 12a unter den Wert der Ansprechschwelle, der Steuertransistor 80 wird nichtleitend und der Schalter 60 unterbricht die Leitung 12. Wird der Kurzschluß zwischen den Leitungen 11 und 12a wieder aufgehoben, kann das Potential auf dem Leiterabschnitt 12a am Ausgang des Schalters 60 und damit an der Prüfleitung 62 der Überwachungseinheit 61 wieder einen Wert über der Ansprechschwelle zum Schließen des Steuertransistors 80 der Überwachungseinheit 61 annehmen und den Normalbetrieb automatisch wiederherstellen.

Auch die Anordnung der Fig. 14 erkennt keine Kurzschlüsse mit Dioden, die in der negativen Halbwelle der Wechselspannung wirksam sind.

Die in Fig. 13 und Fig. 14 dargestellten Trenneinheiten können sinngemäß auch für die Erkennung von Kurzschlüssen eingesetzt werden, die in der negativen Halbwelle der Wechselspannung wirksam sind. Hierfür muß die Trenneinheit gemäß Fig. 13 in die Leitung 12 eingefügt werden, da diese während der negativen Halbwelle das höhere Potential führt, und die Trenneinheit gemäß Fig. 14 muß in die Leitung 11 eingefügt werden, da diese während der negativen Halbwelle das niedrigere Potential führt. Für diese Ausführungsbeispiele werden Kurzschlüsse mit einer Diode in der positiven Halbwelle nicht erkannt.

Die Beispiele der Fig. 13 und Fig. 14 haben jeweils nur eine Abtastung am Ausgang des Schalters 60. Die Schaltungen können jedoch mit einer Überwachungseinheit 68 zur Abtastung auch am Eingang des Schalters 60 nach Fig. 12 erweitert werden. Die Überwachungseinheiten sind dann in Reihe zu schalten.

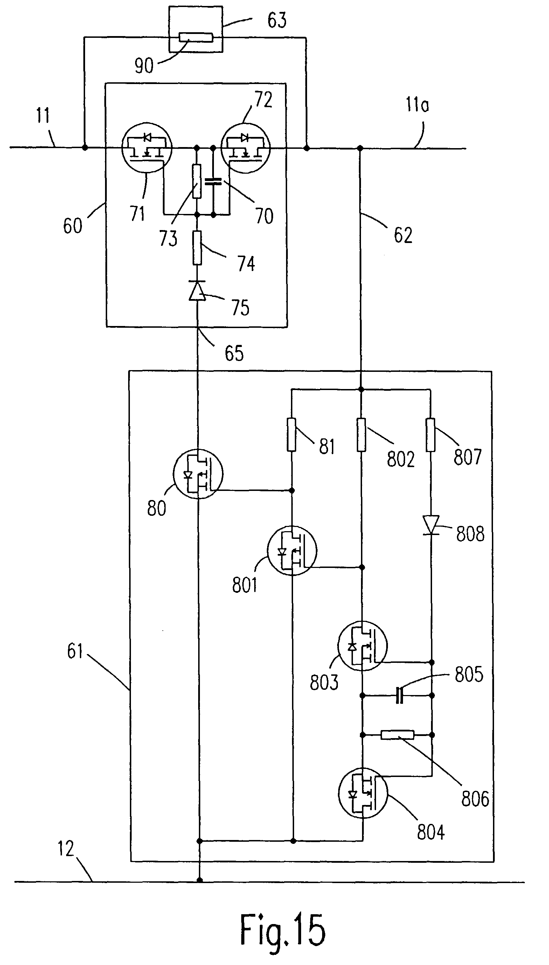

Fig. 15 zeigt ein Ausführungsbeispiel, bei dem während der positiven Halbwelle das Potential der Leitung 11 höher als das Potential der Leitung 12 ist und während der negativen Halbwelle das Potential der Leitung 11 niedriger als das Potential der Leitung 12 ist. Die Schaltung nach Fig. 14 ist Ausgangspunkt für die Schaltung nach Fig. 15, bei der im Schalter 60 auch n-Kanal-Transistoren 71 und 72 verwendet werden. Der Schalter 60 enthält eine Kapazität 70 und eine Diode 75, um die für den leitenden Zustand der Leistungstransistoren 71 und 72 während der positiven Halbwelle erforderliche Ladung Zu speichern. Der Steuertransistor 80 der Überwachungseinheit 61 ist wie in Fig. 14 ein p-Kanal-Transistor.

Für die Überwachungseinheit 61 ohne die Elemente 801 bis 808 werden nur Kurzschlüsse in der negativen Halbwelle erkannt, da der Steuertransistor 80 mit einer negativen Gate-Source-Spannung angesteuert werden muß, um zu leiten. Um diese Überwachungseinheit 61 auch für Kurzschlüsse auszulegen, die nur in der positiven Halbwelle wirksam sind, ist die Überwachungseinheit 61 um eine Schaltung, bestehend aus den Schaltern 801, 803 und 804, den Widerstanden 802, 806 und 807, der Kapazität 805 und der Diode 808 ergänzt, um den Kurzschlußfall über eine Diode, deren Anode mit Leitung 11 und deren Kathode mit Leitung 12 verbunden ist, in der positiven Halbwelle erkennen und den Schalter 60 entsprechend steuern zu können. Bei leitenden Leistungstransistoren 71 und 72 wird die Kapazität 805 während der positiven Halbwelle über den Stromweg Widerstand 807 -> Diode 808 -> Widerstand 806 -> Diode im Schalter 804 auf eine positive Spannung aufgeladen. Die Diode 808 verhindert eine Entladung während der negativen Halbwelle. Damit hält die Kapazität 805 eine Spannung, bei der die Schalter 803 und 804 schließen. Die Entladung über den Widerstand 806 während der negativen Halbwelle ist so bemessen, daß die Kapazität 805 sich nur wenig in einer Periodendauer entladen kann, während die Aufladung über den Widerstand 807 während der Dauer einer positiven Halbwelle geschehen kann. Die ständig geschlossenen Schalter 803 und 804 halten den Schalter 801 immer offen, so daß im Normalbetrieb der Steuertransistor 80 sinngemäß wie in der Schaltung nach Fig. 14 während der negativen Halbwelle funktioniert.

Wird während der negativen Halbwelle das Potential der Leitung 11 niedriger als das Potential der Leitung 12, erhält der p-Kanal Transistor 80 eine negative Gate-Source Spannung, wodurch dieser leitend wird. In diesem Zustand kann die Kapazität 70 des Schalters 60 über den Stromweg Schalter 80 ->Diode 75 ->Widerstand 74 ->Widerstand 73 -> Diode im Leistungstransistor 72 und 71 geladen werden. Dadurch entsteht eine positive Gate-Source Spannung an den Leistungstransistoren 71 und 72, so daß beide leiten und der Schalter 60 schließt. Die Entladung der Kapazität 70 über den Widerstand 73 ist so bemessen, daß die Spannung an der Kapazität 70 sich nur wenig während einer Periodendauer ändert. Die Kapazität 70 wird über den Widerstand 74 während der Dauer einer negativen Halbwelle aufgeladen.

Kurzschlüsse, die sich während beider Halbwellen gleichartig auswirken, sind direkte (niederohmige) Kurzschlüsse und Kurzschlüsse über einen Widerstand zwischen den Leitungen 11 und 12, wobei die Größe des Widerstandes von der Dimensionierung der Trenneinheit abhängt. Tritt am Ausgang der Trenneinheit ein direkter Kurzschluß bzw. ein Kurzschluß über einen Widerstand zwischen den Leitungen 11 und 12 auf, bleibt der Steuertransistor 80, der normalerweise während der negativen Halbwelle geschlossen ist, geöffnet. Während der positiven Halbwelle ist der Steuertransistor 80 immer geöffnet. Damit ist der Steuereingang 65 zu keiner Zeit mehr mit dem Potential der Leitung 12 verbunden, und die Kapazität 70 wird über den Widerstand 73 entladen. Damit kann sich die positive Gate-Source-Spannung an den Leistungstransistoren 71 und 72 nicht aufbauen, so daß die Leistungstransistoren 71 und 72 nichtleitend werden. Damit ist der Generator 10 (Fig. 1) vom Kurzschluß abgetrennt und der Prüfzustand mit der Verbindung über den Prüfwiderstand 63 hergestellt. Der Schaltungsteil mit den Schaltern 803, 804 und 801 ist für diese Art des direkten Kurzschlusses ohne Bedeutung.

Für Kurzschlüsse, die sich nur in der negativen Halbwelle auswirken, d.h. über Dioden mit der Anode an Leitung 12, die während der negativen Halbwelle das höhere Potential hat, und der Kathode an Leiterabschnitt 11a, der während der negativen Halbwelle das niedrigere Potential hat, ist dieselbe Situation wie im oben genannten Fall gegeben, da aufgrund des Kurzschlusses während der negativen Halbwelle der Steuertransistor 80 nichtleitend bleibt und während der positiven Halbwelle der Steuertransistor 80 immer nichtleitend ist. Für Kurzschlüsse, die sich nur in der positiven Halbwelle auswirken, d.h. über Dioden mit der Anode an der Leitung 11, die während der positiven Halbwelle das höhere Potential hat, und der Kathode an der Leitung 12, die während der positiven Halbwelle das niedrigere Potential hat, wird die Kapazität 805 nicht über den Widerstand 807 und die Diode 808 aufgeladen. Die Kapazität 805 wird über den Widerstand 806 entladen und die Schalter 803 und 804 bleiben immer geöffnet. Während der positiven Halbwelle bleiben der Steuertransistor 80 und der Schalter 801 immer geöffnet oder sind nichtleitend. Beim Übergang zur negativen Halbwelle wird der Schalter 801 geschlossen, so daß der Steuertransistor 80 eine Gate-Source Spannung unterhalb seiner Einschaltschwelle erhält und damit auch während der negativen Halbwelle nichtleitend bleibt. Damit ist der Steuereingang 65 zu keiner Zeit mehr mit dem Potential der Leitung 12 verbunden, und die Kapazität 70 wird über den Widerstand 73 entladen. Die Leistungstransistoren 71 und 72 sind nichtleitend, und der Schalter 60 ist geöffnet. Damit ist der Generator 10 (Fig.1) vom Kurzschluß abgetrennt und der Prüfzustand mit der einzigen Verbindung über den Prüfwiderstand 63 eingestellt. Für den Fall, daß ein Kurzschluß während des Betriebs auftritt, erkennt die Überwachungseinheit 61 in der oben beschriebenen Weise Kurzschlüsse zwischen den Leitungen 11a und 12 und die Leistungstransistoren 71 und 72 des Schalters 60 werden schnell geöffnet. Wird der Kurzschluß zwischen den Leitungen 11a und 12 wieder aufgehoben, kann das Potential am Ausgang des Schalters 60 über den Prüfwiderstand 63 und damit an der Prüfleitung 62 der Überwachungseinheit 61 wieder einen Wert annehmen, bei dem der Steuertransistor 80 leitet und damit der Normalbetrieb automatisch wiederhergestellt ist.

Aufgrund der Anordnung des Schalters 60 in der Leitung 11, die nur während der negativen Halbwelle ein niedrigeres Potential als die Leitung 12 führt, werden mit dem Steuertransistor 80 der Überwachungseinheit 61 alle Kurzschlüsse erkannt, die während der negativen Halbwelle auftreten. Mit der Zusatzschaltung bestehend aus den Schaltern 804, 803 und 801 in der Überwachungseinheit 61 werden zusätzlich die Kurzschlüsse erkannt, die in der positiven Halbwelle auftreten.

Wird, im Gegensatz zur Darstellung in Fig. 15, der Schalter 60, bestehend aus n-Kanal Transistoren, in der Leitung 12, die nur während der positiven Halbwelle das niedrigere Potential führt, angeordnet und stellt die Überwachungseinheit 61 über den p-Kanal Steuertransistor 80 die Verbindung zur Leitung 11 her, werden mit dem Steuertransistor 80 der Überwachungseinheit 61 alle Kurzschlüsse erkannt, die während der positiven Halbwelle auftreten. Mit der Zusatzschaltung, bestehend aus den Schaltern 804, 803 und 801 in der Überwachungseinheit 61, werden die zusätzlichen Kurzschlüsse erkannt, die in der negativen Halbwelle auftreten können.

Ebenso kann ein Ausführungsbeispiel angegeben werden, bei dem das Prinzip der Schalteranordnung von Figur 13 zugrundegelegt wird. Der Schalter 60 enthält p-Kanal-Transistoren in Leitung 11 und der Steuertransistor 80 ist ein n-Kanal Transistor. Bei Anordnung des Schalters 60 in der Leitung 11, die nur während der positiven Halbwelle das höhere Potential führt, werden mit dem Steuertransistor 80 der Überwachungseinheit 61, der die Verbindung zur Leitung 12 herstellt, alle Kurzschlüsse erkannt, die während der positiven Halbwelle auftreten. Mit der Zusatzschaltung bestehend aus den Schaltern 804, 803 und 801 in der Überwachungseinheit 61 werden die zusätzlichen Kurzschlüsse erkannt, die in der negativen Halbwelle auftreten können. Hierbei sind dann die Schalter 71, 72, 804 und 803 als p-Kanal Transistoren und die Schalter 80 und 801 als n-Kanal Transistoren ausgeführt.

Wird der zwei p-Kanal Transistoren enthaltende Schalter 60 in Leitung 12 angeordnet, die nur während der negativen Halbwelle das höhere Potential führt, werden mit dem Steuertransistor 80 der Überwachungseinheit 61, der die Verbindung zur Leitung 11 herstellt, alle Kurzschlüsse erkannt, die während der negativen Halbwelle auftreten. Mit der Zusatzschaltung bestehend aus den Schaltern 804, 803 und 801 in der Überwachungseinheit 61 werden die zusätzlichen Kurzschlüsse erkannt, die in der positiven Halbwelle auftreten können. Hierbei sind dann die Schalter 71, 72, 804 und 803 als n-Kanal Transistoren und die Schalter 80 und 801 als pn-Kanal Transistoren ausgeführt.

Die zuletzt genannten Ausführungsbeispiele erkennen alle drei erwähnten Kurzschlußarten einwandfrei, wobei im Falle eines Kurzschlusses über einen Widerstand der Wert des Widerstandes, der noch als Kurzschluß erkannt wird, von dem Wert des Prüfwiderstandes 90 und des Stromflusses im Normalbetrieb abhängt.

Eine weitere Möglichkeit zum Erkennen von Kurzschlüssen bei einer Wechselspannung und zum Steuern eines Leistungstransistors besteht darin, je eine Trenneinheit für die negative Halbwelle und die positive Halbwelle vorzusehen. Für die positive Halbwelle, in der das Potential der Leitung 11 höher ist als das Potential der Leitung 12, wird ein Schalter 60 gemaß Figur 13 in der Leitung 11 vorgesehen oder gemäß Figur 14 in der Leitung 12. Für die negative Halbwelle, in der das Potential der Leitung 11 niedriger ist als das Potential der Leitung 12, wird ein Schalter 60 gemäß Figur 13 in der Leitung 12 vorgesehen oder gemäß Figur 14 in der Leitung 11 angeordnet. Beide Trenneinheiten müssen in ihrer Funktion hintereinandergeschaltet werden, so daß Daten und Energie des Generators 10 nur dann durchgeschaltet werden, wenn beide Trenneinheiten keinen Kurzschluß festgestellt haben. Diese Anordnung erfordert im Gegensatz zur Anordnung nach Figur 15 eine größere Anzahl von Leistungstransistoren.

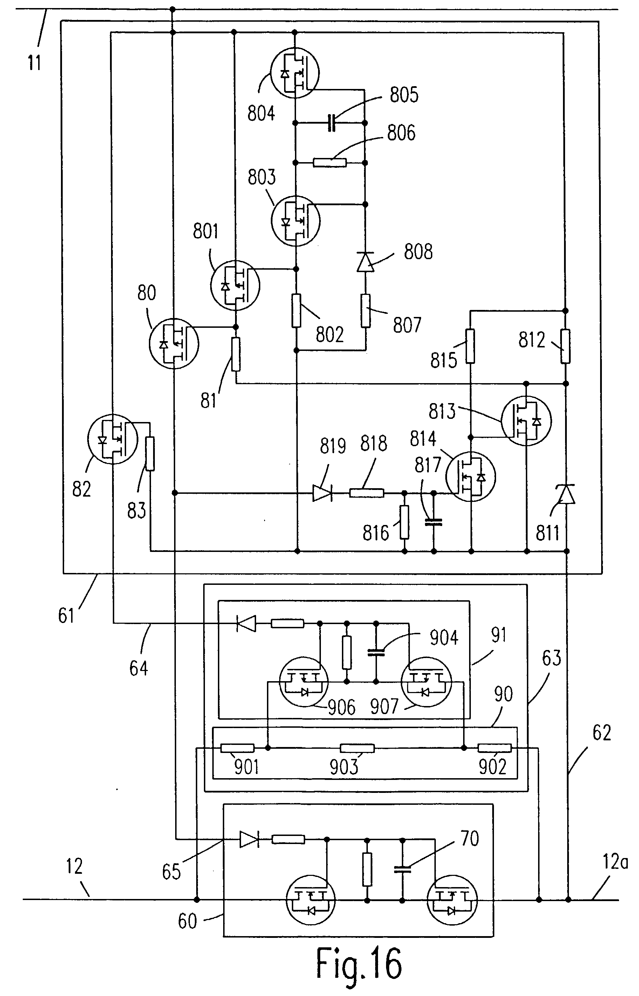

Figur 16 zeigt ein Ausführungsbeispiel, bei dem der Schalter 60 gemäß der Grundschaltung nach Figur 14 in der Leitung 12 angeordnet ist. Die Überwachungseinheit 61 erkennt mit dem Steuertransistor 80 demnach alle Kurzschlüsse, die während der positiven Halbwelle auftreten, und mit den Schaltern 801, 803 und 804 die zusätzlichen Kurzschlüsse, die während der negativen Halbwelle auftreten. Zur Erhöhung der Erkennungssicherheit von Kurzschlüssen während der positiven Halbwelle ist eine Hysterese für die Ansprechschwelle des Steuertransistors 80 vorgesehen. Im Normalbetrieb der Trenneinheit bei geschlossenem Schalter 60 ist eine hohe Ansprechschwelle vorhanden, um schnell beim Absinken der Spannung am Ausgang der Trenneinheit, die mit der Prüfleitung 62 über den Widerstand 81 während der positiven Halbwelle abgetastet wird, den Schalter 60 öffnen zu können, um eine Überlastung des Generators 10 (Fig.1) zu verhindern. Dagegen ist bei geöffnetem Schalter 60 eine Kleine Ansprechschwelle vorhanden, damit über den hochohmigen Prüfwiderstand 63 eine einwandfreie Prüfung auf Kurzschlüsse während der positiven Halbwelle erreicht werden kann und nicht die normale Last von anderen Stationen im System einen Kurzschluß vortäuschen kann.

Diese Hysterese wird mit den Schaltern 813 und 814 und der Zenerdiode 811 erreicht. Ist der Steuertransistor 80 während der positiven Halbwelle leitend, ist auch der Schalter 60 geschlossen. Diese Information wird genutzt, um den Schalter 814 geschlossen zu halten, indem sich die Kapazität 817 während der positiven Halbwelle über den Steuertransistor 80, die Diode 819 und den Widerstand 818 auflädt. Dieser Ladezustand wird während der negativen Halbwelle aufrechterhalten, da die Entladung über den Widerstand 816 so gering eingestellt ist, daß sich der Ladezustand kaum ändert. Durch den geschlossenen Schalter 814 wird der Schalter 813 geöffnet gehalten, und damit bestimmt die Zenerdiode 811 die Ansprechschwelle für das Schalten des Steuertransistor 80. Die Einstellung der Ansprechschwelle muß dabei gewährleisten, daß der Steuertransistor 80 während der positiven Halbwelle so lange geschlossen ist, daß die Kapazitäten 70 und 817 im Schalter 60 und in der Hysteresedefinitionsschaltung der Überwachungsschaltung 61 ausreichend geladen werden können. Ist der Steuertransistor 80 während der positiven Halbwelle nichtleitend, ist auch der Schalter 60 geöffnet, und es besteht nur eine Verbindung über den Prüfwiderstand 63 zwischen Eingang und Ausgang des Schalters 60. Diese Information wird genutzt, um die Ansprechschwelle für den Steuertransistor 80 während der positiven Halbwelle auf einen niedrigen Spannungswert einzustellen, indem die Kapazität 817 über den Widerstand 816 entladen wird und der Schalter 814 geöffnet wird. Dadurch wird der Schalter 813 während der positiven Halbwelle geschlossen, so daß die Zenerdiode 811 überbrückt wird.

Zur Verbesserung der Unterbrechungseigenschaften bei der Übertragung von Energie und/oder Daten durch die Schalter 60 darf der Prüfwiderstand 63 nicht zu niederohmig werden. Im Gegensatz dazu steht die Forderung, daß am Ausgang des Schalters eine Mindestspannungshöhe vorhanden sein muß, um sicher den Normalfall d.h. keinen Kurzschluß erkennen zu können. Bei großen Lasten, d.h. niedrigem Lastwiderstand hinter dem Schalter, muß der Prüfwiderstand entsprechend niederohmig gewählt werden. In dem beschriebenen System, das während der positiven Halbwelle Energie überträgt und damit niederohmig belastet ist und während der negativen Halbwelle Daten überträgt und dann hochohmiger belastet ist, besteht die Möglichkeit, den Prüfwiderstand 63 in der Größe je nach Situation abzustufen. Zu diesem Zweck wird während der negativen Halbwelle mit dem Schalter 82 der Überwachungsschaltung 61 über den Widerstand 43 und der Prüfleitung 62 der Zustand der Leitung 12a am Ausgang des Schalters abgetastet. Kann sich die negative Halbwelle normal aufbauen, wird der Schalter 82 geschlossen, und die Überbrückungskapazität 904 in der Steuereinheit 91 des Prüfwiderstandes 63 wird über die Steuerleitung 64 geladen. Der Ladezustand bleibt während der positiven Halbwelle erhalten und hält damit den Schalter aus den Transistoren 906 und 907 in der Steuereinheit 91 dauernd geschlossen, so daß der Teilwiderstand 903 der Widerstandseinheit 90 überbrückt ist. Damit ist der niederohmige Anteil des Prüfwiderstandes 63, bestehend aus den Teilwiderständen 901 und 902, zwischen dem Eingang und dem Ausgang der Trenneinheit wirksam. Kann sich die negative Halbwelle nicht aufbauen, d.h. bei einem Kurzschluß zwischen den Leitungen 11 und 12a, wird der Schalter 82 nicht geschlossen, und damit kann auch der Schalter mit den Transistoren 906 und 907 in der Steuereinheit 91 des Prüfwiderstandes 63 nicht schließen, so daß der Teilwiderstand 903 nicht überbrückt wird. Damit ist die Summe der Teilwiderstände 901, 902 und 903 des Prüfwiderstandes 63 zwischen dem Eingang und dem Ausgang des Schalters 60 wirksam.

Durch diese Anordnung wird ein zweistufiges Einschalten der Trenneinheit erreicht, d.h. es wird zuerst während der negativen Halbwelle mit dem hochohmigen Prüfwiderstand 63 auf Kurzschlüsse geprüft. Damit werden direkte Kurzschlüsse, Kurzschlüsse über einen niederohmigen Widerstand und Kurzschlüsse über eine Diode, die mit der Anode an Leitung 12 und der Kathode an Leitung 11 verbunden ist, erkannt. Erst wenn solche Kurzschlüsse nicht vorliegen, wird auf einen niederohmigen Prüfwiderstand umgeschaltet, der es ermöglicht, einen Kurzschluß über eine Diode, die mit der Anode an Leitung 11 und mit der Kathode an Leitung 12 verbunden ist, während der positiven Halbwelle zu erkennen. Wenn der Schalter 60 geöffnet ist, besteht eine hochohmige Verbindung zwischen dem Eingang und dem Ausgang des Schalters 60 während der positiven Halbwelle über den Prüfwiderstand 63, d.h. eine gute Entkopplung des noch funktionsfähigen Systems von Systemteilen, die durch den Kurzschluß betroffen sind. Die Summe der Teilwiderstände 901, 902 und 903 des Prüfwiderstandes 63 wird so bemessen, daß für die hochohmige negative Halbwelle ein genügend großes Signal am Ausgang des Schalters 60 entsteht, so daß zwischen dem Normalbetrieb und einem vorhandenen Kurzschluß sicher unterschieden werden kann. Ebenso muß die Summe der Teilwiderstände 901 und 902 so bemessen sein, daß zwischen Normalbetrieb und Kurzschluß während der positiven Halbwelle sicher unterschieden werden kann.

In diesen Ausführungsbeispielen wurden n-Kanal und p-Kanal Transistoren in den Überwachungseinheiten 61 und 68 zum Erkennen eines Kurzschlusses und zum Schalten des Steuereinganges des Schalters 60 eingesetzt. Der Einsatz solcher Transistoren stellt nur eine Art der Realisierung dar, mit der einfach und zuverlässig ein Kurzschluß erkannt werden kann. Andere Möglichkeiten ergeben sich durch den Einsatz von z.B. Spannungskomparatoren und ähnlichen Bauteilen. Die Schalter können ebenfalls mit Bipolartransistoren aufgebaut werden.

## Patentansprüche

1. Verfahren zum Übertragen von Daten und Energie über wenigstens zwei Leiter, an die wenigstens zwei Stationen zum Aussenden von Daten und eine Energiequelle zur Energieversorgung von Stationen angeschlossen sind, dadurch gekennzeichnet, daß über die Leitungen eine bipolare Wechselspannung übertragen wird und die Impulse der einen Polarität der Wechselspannung ausschließlich zur Energieübertragung und die Impulse der anderen Polarität ausschließlich zur Datenübertragung verwendet werden.

2. Verfahren nach Anspruch 1, dadurch gekernzeichnet, daß die Impulse der einen Polarität der Wechselspannung niederohmig und die Impulse der anderen Polarität hochohmig in die Leiter eingespeist werden.

3. Verfahren nach Anspruch 2, dadurch gekennzeichnet, daß zum Aussenden von Daten durch eine Station die Impulse der anderen Polarität der Wechselspannung in dieser Station abhängig von den zu übertragenden Daten belastet werden.

4. System mit wenigstens zwei Stationen, die über wenigstens zwei Leiter zur Übertragung von Daten und Energie miteinander verbunden sind, und mit einer Energiequelle, die mit den Leitern gekoppelt ist, dadurch gekennzeichnet, daß die Energiequelle zur Einspeisung einer bipolaren Wechselspannung mit Impulsen einer ersten und einer zweiten Polarität in die Leiter eingerichtet ist, daß in jeder Station ohne eigene Energieversorgung an die Leiter angeschlossene Mittel zum Entnehmen und Speichern von Energie nur aus den Impulsen der ersten Polarität vorgesehen sind, daß in jeder zum Aussenden von Daten vorgesehenen Stationen Belastungsmittel an die Leiter angeschlossen sind, die abhängig von den auszusendenden Daten nur Impulse der Wechselspannung der zweiten Polarität belasten, und daß in jeder zum Empfangs von Daten vorgesehenen Stationen ein Detektor zum Auswerten der Amplitude nur der Impulse der anderen Polarität an die Leiter angeschlossen ist.

5. System nach Anspruch 4, dadurch gekennzeichnet, daß die Energiequelle eingerichtet ist, um die Impulse der Wechselspannung der ersten Polarität niederohmiger als die Impulse der anderen Polarität in die Leiter einzuspeisen.

6. System nach Anspruch 5, dadurch gekennzeichnet, daß die Energiequelle über wenigstens einen Widerstand mit einem dazu parallelgeschalteten Gleichrichter mit den Leitern verbunden ist.

7. System nach einem der Ansprüche 4 bis 6, dadurch gekennzeichnet, daß die Energiequelle einen Generator für Wechselspannung und einen Übertrager mit einer Primärwicklung und einer Sekundärwicklung enthält, wobei die Primärwicklung mit dem Generator und die Sekundärwicklung mit den Leitern gekoppelt ist.

8. System nach einem der Ansprüche 4 bis 7, dadurch gekennzeichnet, daß ein dritter Leiter vorgesehen ist, der mit der Energiequelle und mit den Stationen gekoppelt ist.

9. System nach Anspruch 7 und 8, dadurch gekennzeichnet, daß die Sekundärwicklung einen Mittenanschluß aufweist, der mit dem dritten Leiter gekoppelt ist.

10. System nach Anspruch 7 und 8, dadurch gekennzeichnet, daß vorzugsweise in der Energiequelle zwei Schalter und eine Steuereinheit vorgesehen sind, wobei die Schalter zwischen dem ersten und dem dritten Leiter bzw. zwischen dem zweiten und dem dritten Leiter angeordnet sind und die Steuereinheit bei einer Unterbrechung des ersten oder des zweiten Leiters den zugehörigen Schalter schließt.

11. System nach einem der Ansprüche 5 bis 10, dadurch gekennzeichnet, daß einer der Leiter durch eine Masseverbindung gebildet ist.

12. System nach Anspruch 4, dadurch gekennzeichnet, daß in wenigstens einen Leiter eine Trenneinheit eingefügt ist, wobei jede Trenneinheit den Leiter in einen ersten und einen zweiten Leiterabschnitt unterteilt und einen mit den Leiterabschnitten verbundenen Schalter und eine Überwachungseinheit enthält, die an wenigstens einen Leiterabschnitt angeschlossen ist und eingerichtet ist, den Schalter Zu betätigen, wenn auf wenigstens einem der angeschlossenen Leiterabschnitte eine Spannung eine erste Ansprechschwelle überschreitet oder eine zweite Ansprechschwelle unterschreitet, und daß der Schalter durch ein strombegrenzendes Element überbrückt ist.

13. Station für ein System nach einem der Ansprüche 4 bis 12 mit Anschlüssen für wenigstens zwei Leitungen zum Empfangen von Energie zum Betrieb von Schaltungen in der Station und zum Empfangen und/oder Aussenden von Daten, wobei mit den Leitungen gekoppelt sind
- Spannungsversorgungsmittel Zum Entnehmen und Speichern von Energie nur aus den Impulsen der ersten Polarität auf den Leitungen,
- Belastungsmittel, um abhängig von auszusendenden Daten nur Impulse der zweiten Polarität auf den Leitungen Zu belasten,
- ein Detektor zum Auswerten der Amplitude nur der zweiten Polarität.

14. Station nach Anspruch 13, dadurch gekennzeichnet, daß die Mittel eine gleichrichtende Anordnung und einen Energiespeicher enthalten, wobei die gleichrichtende Anordnung nur während der Impulse der ersten Polarität dem Energiespeicher elektrische Energie zufuhrt und der Energiespeicher mit Spannungsversorgungsanschlüssen von elektronischen Schaltungen in der Station gekoppelt ist.

15. Station nach Anspruch 13 für ein System nach Anspruch 8, dadurch gekennzeichnet, daß die Spannungsversorgungsmittel die Reihenschaltung eines ersten Gleichrichter, des Energiespeichers und eines zweiten Gleichrichters enthalten, die zwischen dem ersten und dem zweiten Leiter angeordnet ist, und daß zwei Anschlüsse des Energiespeichers über weitere Gleichrichter mit dem dritten Leiter verbunden sind.

16. Station nach Anspruch 13 für ein System nach Anspruch 8, dadurch gekennzeichnet, daß die Belastungsmittel die Reihenschaltung eines ersten Gleichrichters, einer schaltbaren Impedanz und eines zweiten Gleichrichters enthalten und daß die Verbindungspunkte der Impedanz mit dem ersten und mit dem zweiten Gleichrichter je über weitere Gleichrichter mit dem dritten Leiter verbunden sind.

17. Trenneinheit für ein System nach Anspruch 12, dadurch gekennzeichnet, daß der von der Überwachungseinheit angesteuerte Schalter die durch ihn unterteilte Leitung verbindet, wenn die Spannung die erste Ansprechschwelle überschreitet, und unterbricht, wenn die Spannung die zweite Ansprechschwelle unterschreitet.

18. Trenneinheit nach Anspruch 17, dadurch gekennzeichnet, daß die Überwachungseinheit mit beiden Leitungsabschnitten verbunden ist.

19. Trenneinheit nach Anspruch 17 oder 18,
dadurch gekennzeichnet, daß der Schalter für die Leitung eines Stroms in beiden Richtungen ausgebildet ist.

20. Trenneinheit nach einem der Ansprüche 17 bis 19, dadurch gekennzeichnet, daß der Schalter einen ersten und einen zweiten Feldeffekttransistor gleichen Leitungstpys enthält, die in Reihe zwischen beide Leiterabschnitte geschaltet sind und deren Gate miteinander verbunden und mit der Überwachungseinheit gekoppelt sind.

21. Trenneinheit nach Anspruch 20, dadurch gekennzeichnet, daß die Gates des ersten und des zweiten Feldeffekttransistors über einen Kondensator und ein dazu parallel geschaltetes Entladungselement mit dem Verbindungspunkt des ersten und des zweiten Feldeffekttransistors und über eine Diode mit ienem dritten Feldeffekttransistor verbunden sind.

22. Trenneinheit nach Anspruch 21 dadurch gekennzeichnet, daß der Kondensator im Schalter die notwendige Ladung für ein Schließen des ersten und zweiten Feldeffekttransistors in der zur Ansprechschwelle entgegengesetzten Halbwelle der Wechselspannung speichert.

23. Trenneinheit nach einem der Ansprüche 20 bis 22, dadurch gekennzeichnet, daß die Überwachungseinheit für jeden angeschlossenen Leiterabschnitt einen dritten Feldeffekttransistor enthält, der zwischen den nicht unterteilten Leiter und den Gates des ersten und zweiten Feldeffekttransistors geschaltet ist und dessen Gate mit dem angeschlossenen Leiterabschnitt gekoppelt ist, wobei bei Anschluß der Überwachungseinheit an beide Leiterabschnitte die zugehörigen dritten Feldeffekttransistoren in Reihe geschaltet sind.

24. Trenneinheit nach einem der Ansprüche 22 oder 23, dadurch gekennzeichnet, daß der Leitungstyp des ersten und zweiten Feldeffekttransistors entgegengesetzt zu dem Leitungstyp der dritten Feldeffekttransistoren ist und der Leitungstyp der Feldeffekttransistoren festlegt, in welcher Halbwelle der Wechselspannung die Ansprechschwelle für die Überwachungseinheit liegt.

25. Trenneinheit nach einem der Ansprüche 22 bis 24, dadurch gekennzeichnet, daß die Überwachungseinheit mit zusätzlichen Schaltungsteilen versehen ist, die bei Überlastung in der nicht durch die Ansprechschwellen überwachten Halbwelle den dritten Feldeffekttransistor sperren.

26. Trenneinheit nach Anspruch 17, dadurch gekennzeichnet, daß die Anprechschwelle der Überwachungseinheit eine Hysterese aufweist, wobei bei geschlossenen Schaltern die Ansprechschwelle hoch und bei geöffneten Schaltern die Ansprechschwelle niedrig ist.

27. Trenneinheit nach Anspruch 17, dadurch gekennzeichnet, daß das strombegrenzende Element Prüfwiderstände enthält, die zwischen einem hochohmigen Zustand und einem niederohmigen Zustand umschaltbar sind.

28. Trenneinheit nach Anspruch 27, dadurch gekennzeichnet, daß bei geöffnetem Schalter in einem Leiter der hochohmige Prüfwiderstand eingestellt ist und bei geschlossenem Schalter der Prüfwiderstand durch Überbrücken von Teilwiderständen niederohmiger ist.
